# EUROPEAN PATENT SPECIFICATION

(11) **EP 3 355 606 B1**
(45) Date of publication and mention of the grant of the patent: **30.10.2024**
(21) Application number: 16847996.2
(22) Date of filing: 02.09.2016
(51) Int. Cl.: H04W 24/10, H04B 17/00, H04L 1/00

(54) **METHOD AND DEVICE FOR DETECTING SIGNAL STRENGTH**
VERFAHREN UND VORRICHTUNG ZUM ERFASSEN VON SIGNALSTÄRKE
PROCÉDÉ ET DISPOSITIF DE DÉTECTION D'INTENSITÉ DE SIGNAL

(30) Priority: 22.09.2015 CN 201510607929
(43) Date of publication of application: 01.08.2018
(73) Proprietor: CHINA MOBILE COMMUNICATIONS GROUP CO., LTD, Beijing 100032 (CN)
(72) Inventor: ZHANG, Xiaoran, Beijing 100032 (CN); HU, Nan, Beijing 100032 (CN); PAN, Qun, Beijing 100032 (CN); LI, Nan, Beijing 100032 (CN)
(74) Representative: J A Kemp LLP
(86) International application number: PCT/CN2016/097849
(87) International publication number: WO 2017/050114

(56) References cited:
- CN-A- 102 083 002
- CN-A- 102 480 756
- US-A1- 2014 073 314
- "3rd Generation Partnership Project; Technical Specification Group Radio Access Network; Evolved Universal Terrestrial Radio Access (E-UTRA); Radio Resource Control (RRC); Protocol specification (Release 12)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V12.6.0, 30 June 2015 (2015-06-30), pages 1 - 449, XP050965796
- SHARP: "Measurement configurations for LAA", vol. RAN WG2, no. Beijing, China; 20150824 - 20150828, 23 August 2015 (2015-08-23), XP051004334, Retrieved from the Internet <URL:http://www.3gpp.org/ftp/Meetings_3GPP_SYNC/RAN2/Docs/> [retrieved on 20150823]
- ERICSSON: "RRM Measurements for LAA", vol. RAN WG2, no. Fukuoka, Japan; 20150525 - 20150529, 24 May 2015 (2015-05-24), XP050972089, Retrieved from the Internet <URL:http://www.3gpp.org/ftp/Meetings_3GPP_SYNC/RAN2/Docs/> [retrieved on 20150524]
- ETRI: "RSSI Measurement for LAA", vol. RAN WG2, no. Beijing, China; 20150824 - 20150828, 23 August 2015 (2015-08-23), XP051004149, Retrieved from the Internet <URL:http://www.3gpp.org/ftp/Meetings_3GPP_SYNC/RAN2/Docs/> [retrieved on 20150823]
- INTEL CORPORATION: "RSSI measurement for LAA", vol. RAN WG2, no. Beijing, China; 20150824 - 20150828, 23 August 2015 (2015-08-23), XP051004021, Retrieved from the Internet <URL:http://www.3gpp.org/ftp/Meetings_3GPP_SYNC/RAN2/Docs/> [retrieved on 20150823]
- CMCC: "RSSI measurements and reporting", vol. RAN WG2, no. Beijing, China; 20150824 - 20150828, 23 August 2015 (2015-08-23), XP051040213, Retrieved from the Internet <URL:http://www.3gpp.org/ftp/Meetings_3GPP_SYNC/RAN2/Docs/> [retrieved on 20150823]
- CATT: "RRM measurement for LAA cell", vol. RAN WG2, no. Beijing, P.R.China; 20150824 - 20150828, 23 August 2015 (2015-08-23), XP051004206, Retrieved from the Internet <URL:http://www.3gpp.org/ftp/Meetings_3GPP_SYNC/RAN2/Docs/> [retrieved on 20150823]

## Description

### CROSS-REFERENCE TO RELATED APPLICATIONS

The present application claims priority to Chinese Patent Application No. 201510607929.5, filed on September 22, 2015.

### TECHNICAL FIELD

The disclosure relates to the field of mobile communications, and particularly to a method for signal strength detection and device. Related technologies are known from SHARP: "Measurement configurations for LAA", 3GPP DRAFT, R2-153671, ETRI: "RSSI Measurement for LAA", 3GPP DRAFT, R2-153429, INTEL CORPORATION: "RSSI measurement for LAA", 3GPP DRAFT, R2-153273, CMCC: "RSSI measurements and reporting", 3GPP DRAFT, R2-153217, and CATT: "RRM measurement for LAA cell", 3GPP DRAFT. R2-153494.

### BACKGROUND

At present, in a Long Term Evolution (LTE) network, a measurement and reporting result of a terminal includes Reference Signal Received Power (RSRP) and Reference Signal Received Quality (RSRQ), wherein the RSRP is a mean value of signal strength of Cell-specific Reference Signal (CRS) locations of a serving cell, and reflects signal strength; and RSRQ=N×RSRP/RSSI, wherein the RSRQ reflects signal quality, a Received Signal Strength Indication (RSSI) represents total power of a useful signal, interference and noise, and N represents a number of Resource Blocks (RBs) in a measurement bandwidth. The terminal may measure and report the RSRP and the RSRQ for mobility management, wherein mobility management includes cell selection, reselection, handover, cell activation and deactivation during carrier aggregation and the like.

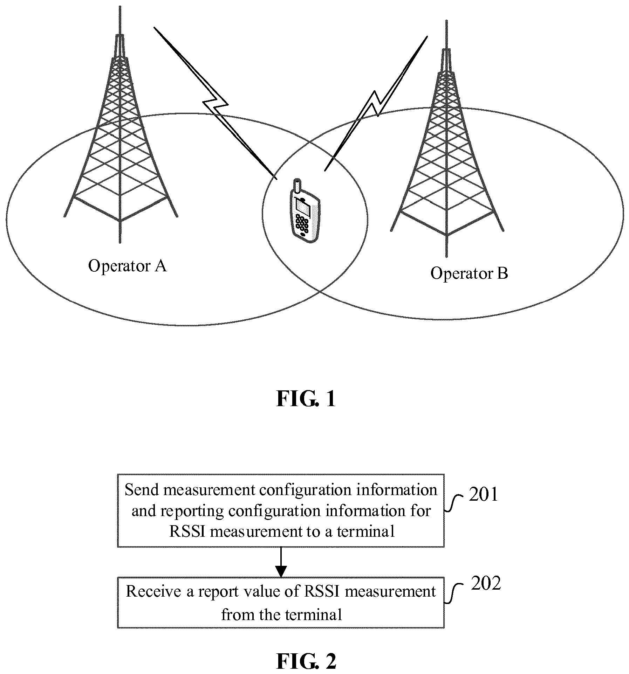

However, for an LTE system operating on an unlicensed frequency band, since Wireless Fidelity (WIFI) or another operator may share the frequency band, it is necessary to consider factors such as signal quality of a carrier on the unlicensed frequency band, a busy/idle condition of a channel and the like. For such a condition, a base station may perform Listen Before Talk (LBT) before downlink sending to judge whether the channel is available. In addition, RSRP and RSRQ measured and reported by a terminal may also assist a network in learning about signal quality and interference condition of a terminal side. However, since base stations of multiple operators may work on a carrier of the same unlicensed frequency band, there may exist the condition of "hidden node", which may cause the condition of no interference on a base station side but serious interference on the terminal side, although the base stations may perform LBT before downlink sending. For example, as shown in FIG. 1, a base station of an operator A monitors that a channel is idle, and sends data to a terminal. But from a terminal side, a base station of an operator B brings relatively strong interference and works on a carrier of the same unlicensed frequency band. Therefore, the conditions of demodulation errors, incapability of correctly receiving the data and the like may occur to the terminal under the condition of relatively strong interference.

For the problems, although a network may learn about signal quality and interference condition of a terminal side through RSRP and RSRQ information reported by a terminal, RSRP is signal strength of CRS locations of a serving cell, RSRQ is a ratio of the signal strength of CRSs and total power, and the two measures may not directly reflect an interference condition of different operators and different systems.

Therefore, it is necessary to provide a measurement and reporting solution capable of directly reflecting an interference condition of different operators or different systems.

### SUMMARY

The invention is set out in the appended set of claims.

In the disclosure, the terminal may perform RSSI measurement and reporting according to the received measurement configuration information and reporting configuration information for RSSI measurement, and after receiving the report value of RSSI measurement reported by the terminal, the network side may discover a hidden node according to the received report value of RSSI measurement, that is, the hidden node may be found through RSSI measurement of the terminal in the disclosure. In addition, the RSSI-based measurement control flow of the disclosure may ensure that the report value of RSSI measurement reported by the terminal may reflect an interference condition as accurately as possible, and an interference condition among different operators or different systems may further be directly reflected.

### BRIEF DESCRIPTION OF DRAWINGS

In order to describe the technical solutions of the embodiments of the application more clearly, the drawings required to be used for descriptions about the embodiments will be simply introduced. Obviously, the drawings described below are only some embodiments recorded in the application. Those skilled in the art may further obtain other drawings according to these drawings without creative work. The following drawings are not equally scaled intentionally according to actual sizes, and the point is to show the main purpose of the application.
FIG. 1 is a schematic diagram illustrating that when an operator A sends data to a terminal, the terminal is subjected to interference of an operator B operating on a carrier of the same unlicensed frequency band.
FIG. 2 is a flowchart of a method for signal strength detection applied to a network side not covered by the scope of the claims.
FIG. 3 is a main flowchart of a method for signal strength detection applied to a terminal according to an embodiment of the disclosure.
FIG. 4 is a detailed flowchart of a method for signal strength detection applied to a terminal according to an embodiment of the disclosure.
FIG. 5 is a structure block diagram of a device for signal strength detection applied to a network side not covered by the scope of the claims.
FIG. 6 is a structure block diagram of a device for signal strength detection applied to a terminal according to an embodiment of the disclosure.

### DETAILED DESCRIPTION

The technical solutions in some embodiments of the disclosure will be clearly and completely described below in combination with the drawings in some embodiments of the disclosure. Obviously, the described embodiments are not all embodiments but only some embodiments of the disclosure. All other embodiments obtained by those skilled in the art on the basis of the embodiments in the disclosure without creative work shall fall within the scope of protection of the disclosure.

FIG. 2 is a flowchart of a method for signal strength detection applied to a network side according to an embodiment of the disclosure. The method may be performed by a base station. The method includes the following steps.

In Step 201, measurement configuration information and reporting configuration information for RSSI measurement are sent to a terminal.

In the step, the measurement configuration information for RSSI measurement may include at least one of measurement frequency, measurement configuration of a reference signal, an RSSI measurement starting event or period and prompt information. The prompt information is used to prompt whether to remove a RSRP of a serving cell from RSSI sample values. The reporting configuration information for RSSI measurement may include: an RSSI reporting threshold value and an RSSI reporting event or period.

Specifically, the measurement configuration of the reference signal includes at least one of a measurement period, a measurement opportunity in the period, or a duration of one measurement opportunity. In addition, when the measurement frequency includes multiple measurement cells, a network side may further send measurement configuration information including a measurement cell list at the measurement frequency to the terminal. At this moment, the prompt information for prompting whether to remove the RSRP of the serving cell from the RSSI sample values may be prompt information for the measurement frequency, or may be prompt information for each measurement cell in the measurement cell list.

Specifically, the reporting configuration information may further include a reporting type of the RSSI sample values. The reporting type of the RSSI sample values may be at least one of a mean value of the RSSI sample values, a ratio of the RSSI sample values higher than the RSSI reporting threshold value to all the RSSI sample values, or a mean value of the RSSI sample values higher than the RSSI reporting threshold value.

In addition, if the reporting configuration information further includes an RSSI measurement time or an RSSI measurement sample number, the mean value of the RSSI sample values may be a mean value within the RSSI measurement time or of the number of the RSSI measurement sample values; the ratio of the RSSI sample values higher than the RSSI reporting threshold value to all the RSSI sample values may be a ratio of the RSSI sample values higher than the RSSI reporting threshold value to all the RSSI sample values within the RSSI measurement time or of the number of the RSSI measurement sample values; and the mean value of the RSSI sample values higher than the RSSI reporting threshold value may be a mean value of the RSSI sample values higher than the RSSI reporting threshold value within the RSSI measurement time or within the number of the RSSI measurement samples.

In Step 202, a report value of RSSI measurement reported by the terminal is received.

In the step, specifically, the report value of RSSI measurement is obtained by processing the RSSI sample values by the terminal according to the reporting configuration information in Step 101, where the RSSI sample values are obtained by performing RSSI measurement by the terminal according to the measurement configuration information in Step 101.

In the example, the network side sends the measurement configuration information for RSSI measurement and the reporting configuration information for RSSI measurement to the terminal at first to enable the terminal to perform RSSI measurement and reporting according to the received measurement configuration information and reporting information for RSSI measurement, and then receives the report value of RSSI measurement reported by the terminal, so that the problem that an existing terminal does not support reporting of a report value of RSSI measurement is solved.

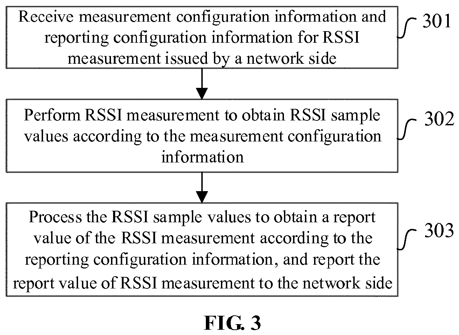

FIG. 3 is a main flowchart of a method for signal strength detection applied to a terminal according to an embodiment of the disclosure. The method may be performed by a terminal. The method includes the following steps.

In Step 301, measurement configuration information and reporting configuration information for RSSI measurement issued from a network side are received.

In the step, the terminal receives the measurement configuration information and reporting configuration information for RSSI measurement issued from the network side.

In Step 302, RSSI measurement is performed to obtain RSSI sample values according to the measurement configuration information.

In the step, the terminal performs RSSI measurement to obtain the RSSI sample values according to the received measurement configuration information for RSSI measurement issued from the network side,.

In Step 303, the RSSI sample values are processed to obtain a report value of RSSI measurement according to the reporting configuration information, and the report value of RSSI measurement is reported to the network side.

In the step, the terminal processes the RSSI sample values according to the received reporting configuration information for RSSI measurement issued from the network side, and then reports the processed report value of RSSI measurement to the network side.

In the embodiment, after receiving the measurement configuration information and reporting configuration information for RSSI measurement, the terminal performs RSSI measurement to obtain the RSSI sample values according to the measurement configuration information, then process the RSSI sample values according to the reporting configuration information and report the processed report value of RSSI measurement to the network side; and after receiving the report value of RSSI measurement, the network side may discover a hidden node according to the received report value of RSSI measurement, that is, the hidden node may be found through RSSI measurement of the terminal in the disclosure. In addition, in the disclosure, the RSSI-based measurement control flow of the disclosure may ensure that the report value of RSSI measurement reported by the terminal may reflect an interference condition as accurately as possible, and an interference condition among different operators or different systems may further be directly reflected..

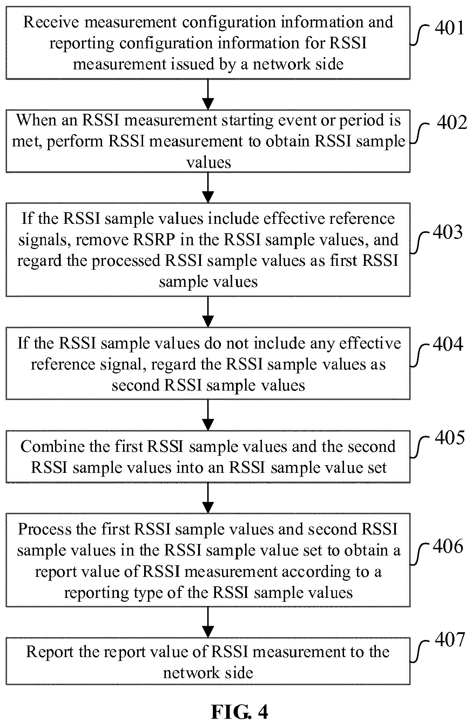

FIG. 4 is a detailed flowchart of a method for signal strength detection applied to a terminal according to an embodiment of the disclosure. The method includes the following steps.

In Step 401, measurement configuration information and reporting configuration information for RSSI measurement issued from a network side are received.

In the step, specifically, the measurement configuration information for RSSI measurement includes at least one of measurement frequency, measurement configuration of a reference signal, an RSSI measurement starting event or period, or prompt information. The prompt information is used to prompt whether to remove RSRP of a serving cell from RSSI sample values. The reporting configuration information for RSSI measurement may include: an RSSI reporting threshold value and an RSSI reporting event or period.

Specifically, the reporting configuration information may further include a reporting type of the RSSI sample values. The reporting type of the RSSI sample values may be at least one of a mean value of the RSSI sample values, a ratio of the RSSI sample values higher than the RSSI reporting threshold value to all the RSSI sample values, or a mean value of the RSSI sample values higher than the RSSI reporting threshold value.

In addition, if the reporting configuration information further includes an RSSI measurement time or an RSSI measurement sample number, the mean value of the RSSI sample values may be a mean value within the RSSI measurement time or within the number of the RSSI measurement samples; the ratio of the RSSI sample values higher than the RSSI reporting threshold value to all the RSSI sample values may be a ratio of the RSSI sample values higher than the RSSI reporting threshold value to all the RSSI sample values within the RSSI measurement time or within the number of the RSSI measurement samples; and the mean value of the RSSI sample values higher than the RSSI reporting threshold value may be a mean value of the RSSI sample values higher than the RSSI reporting threshold value within the RSSI measurement time or within the number of the RSSI measurement samples.

In Step 402, when the RSSI measurement starting event or period is met, RSSI measurement is performed to obtain the RSSI sample values.

In the step, when the terminal meets the RSSI measurement starting event or period, the terminal starts performing RSSI measurement and obtains the RSSI sample values. Specifically, the RSSI measurement starting event or period may be included in the measurement configuration information for RSSI measurement, and is transmitted to the terminal by the network side.

In Step 403, if the RSSI sample values include a valid reference signal, an RSRP in the RSSI sample values is removed, and the processed RSSI sample values are regarded as first RSSI sample values.

Specifically, present RSSI for RSRQ calculation includes interference and noise, and further includes a useful signal. In order to eliminate influence of the useful signal as much as possible, an RSRP signal of a specified serving cell may be removed from the RSSI. In addition, a use of the RSSI is different from uses of RSRP and RSRQ, the RSRP and the RSRQ are used for mobility management, while the RSSI is used to discover a hidden node and the like. A scenario where a hidden node exists may be that: a base station discovers that a channel is idle after LBT, while a report value of RSSI measurement reported by the terminal is very high (which indicates that the channel is busy), in this case, there may be a "hidden node".

In the step, the terminal has to determine whether the RSSI sample values obtained by each measurement include a valid reference signal. If the RSSI sample values include a valid reference signal, the RSRP in the RSSI sample value is removed, and the processed RSSI sample values are regarded as first RSSI sample values.

Specifically, the RSRP in the RSSI sample values may be subtracted according to RSSI_DRS=RSSI_drs-RSRP, where RSSI_DRS represents the first RSSI sample value, RSSI_drs represents the RSSI sample value, and RSRP represents the RSRP of the serving cell; or,
the RSRP in the RSSI sample values is subtracted according to RSSI_DRS=RSSI_drs-N×RSRP, where RSSI_DRS represents the first RSSI sample value, RSSI_drs represents the RSSI sample value, N represents a number of RBs in a measurement bandwidth, and RSRP represents the RSRP of the serving cell; or,
the RSRP in the RSSI sample values is subtracted according to RSSI_DRS=RSSI_drs-N×M×RSRP, where RSSI_DRS represents the first RSSI sample value, RSSI_drs represents the RSSI sample value, N represents the number of RBs in the measurement bandwidth, M represents a number of REs for RSRP measurement in each RB, and RSRP represents the RSRP of the serving cell.

It is to be noted here that the measurement bandwidth in the step does not refer to an operating bandwidth of the network side, and may refer to a local time-frequency location, for example, only a location corresponding to an uplink scheduling grant. In addition, the reference signal may be a Discovery Reference Signal (DRS), but is not limited to such a reference signal.

In Step 404, if the RSSI sample values do not include any valid reference signal, the RSSI sample values are regarded as second RSSI sample values.

In the step, if the RSSI sample values do not include any valid reference signals, the RSRP is not required to be subtracted from the RSSI sample values, and the RSSI sample values are directly regarded as the second RSSI sample values. Specifically, the reference signals may be DRSs, and are not limited to such reference signals.

Alternatively, the terminal may further perform RSSI measurement through conventional CRS, and if RSSI measurement is performed through the conventional CRS, the RSSI sample values are regarded as third RSSI sample values. For the third RSSI sample values, the network side and the terminal may preset whether RSRP is to be subtracted, and when the RSSI sample values are obtained, the RSRP is reserved or removed according to whether the RSRP is to be removed.

In Step 405, the first RSSI sample values and the second RSSI sample values are combined into an RSSI sample value set.

In the step, the first RSSI sample values and the second RSSI sample values are not distinguished, and instead, the first RSSI sample values and the second RSSI sample values are combined into an RSSI sample value set.

In Step 406, the first RSSI sample values and second RSSI sample values in the RSSI sample value set are processed to obtain a report value of RSSI measurement according to the reporting type of the RSSI sample values.

In the step, the reporting type of the RSSI sample values is included in the reporting configuration information, and the terminal may process all the RSSI sample values in the RSSI sample value set according to the reporting type of the RSSI sample values, that is, the first RSSI sample values and second RSSI sample values in the RSSI sample value set are processed together. Alternatively, when the RSSI sample values include the third RSSI sample values, the terminal may add the third RSSI sample values into the RSSI sample value set at the same time.

Specifically, the reporting type of the RSSI sample values may be at least one of a mean value of the RSSI sample values, a ratio of the RSSI sample values higher than the RSSI reporting threshold value to all the RSSI sample values, or a mean value of the RSSI sample values higher than the RSSI reporting threshold value.

In addition, if the reporting configuration information further includes the RSSI measurement time or the RSSI measurement sample number, the mean value of the RSSI sample values may be the mean value within the RSSI measurement time or within the number of the RSSI measurement samples; the ratio of the RSSI sample values higher than the RSSI reporting threshold value to all the RSSI sample values may be the ratio of the RSSI sample values higher than the RSSI reporting threshold value to all the RSSI sample values within the RSSI measurement time or within the number of the RSSI measurement samples; and the mean value of the RSSI sample values higher than the RSSI reporting threshold value may be the mean value of the RSSI sample values higher than the RSSI reporting threshold value within the RSSI measurement time or within the number of the RSSI measurement samples.

In Step 407, the report value of RSSI measurement is reported to the network side.

In the step, specifically, when the measurement frequency included in the measurement configuration information for RSSI measurement includes multiple measurement cells, when the report value of RSSI measurement is reported, reporting may be performed corresponding to the measurement frequency or the certain cell. Specifically, the terminal may periodically report or nonperiodically report a report value of RSSI measurement corresponding to the measurement frequency; or, the terminal may periodically or nonperiodically report a report value of the RSSI measurement corresponding to each cell in the measurement cell list.

Alternatively, when performing periodic reporting, the terminal may further report a measurement sample number for calculating the report value of RSSI measurement by the terminal within the period. When performing the nonperiodic reporting, the terminal may further report the measurement sample number or measurement time for calculating the report value of RSSI measurement by the terminal within the period.

In the embodiment, the measurement configuration information, received by the terminal, for RSSI measurement includes the prompt information configured to prompt whether to remove the RSRP of the serving cell from the RSSI sample values, and the reporting configuration information for RSSI measurement includes reporting types of multiple RSSI sample values. When the terminal performs RSSI measurement, the terminal may determine whether to remove the RSRP in the RSSI sample values according to whether the RSSI sample values include a valid reference signal, make statistics on the RSSI sample values separately according to whether to remove the RSRP, and report the report value of RSSI measurement during subsequent RSSI measurement reporting. According to the embodiment, whether to remove the RSRP in the RSSI sample values is determined according to whether the RSSI sample values include a valid reference signal, that is, a corresponding RSSI measurement algorithm, reporting mechanism and flow are defined, so that it is ensured that the report value of RSSI measurement reported by the terminal may reflect an interference condition as accurately as possible, an interference condition among different operators or different systems is further directly reflected, and the problems of hidden node and the like are discovered.

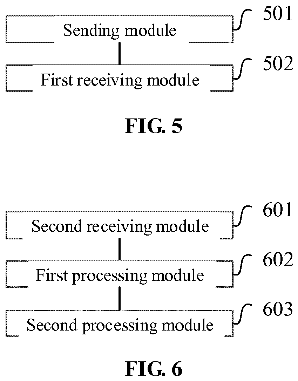

FIG. 5 is a structure block diagram of a device for signal strength detection applied to a network side not covered by the scope of the claims. The device includes:
a sending module 501, configured to send measurement configuration information and reporting configuration information for RSSI measurement to a terminal; and
a first receiving module 502, configured to receive a report value of RSSI measurement reported by the terminal, wherein the measurement configuration information is used to instruct the terminal to perform the RSSI measurement to obtain RSSI sample values, and the reporting configuration information is used to instruct the terminal to process the RSSI sample values to obtain the report value of the RSSI measurement.

The measurement configuration information includes at least one of measurement frequency, a measurement configuration of a reference signal, an RSSI measurement starting event or period and prompt information, wherein the prompt information is used to prompt whether to remove RSRP of a serving cell from the RSSI sample values.

Alternatively, the reporting configuration information includes: an RSSI reporting threshold value and an RSSI reporting event or period.

Alternatively, the reporting configuration information further includes a reporting type of the RSSI sample values, wherein the reporting type of the RSSI sample values is at least one of a mean value of the RSSI sample values, a ratio of the RSSI sample values higher than the RSSI reporting threshold value to all the RSSI sample values, or a mean value of the RSSI sample values higher than the RSSI reporting threshold value.

FIG. 6 is a structure block diagram of a device for signal strength detection applied to a terminal side according to an embodiment of the disclosure. The device includes a second receiving module 601, a first processing module 602, and a second processing module 603.

The second receiving module 601 is configured to receive measurement configuration information and reporting configuration information, transmitted by a network side, for RSSI measurement.

The first processing module 602 is configured to perform RSSI measurement to obtain RSSI sample values according to the measurement configuration information.

The second processing module 603 is configured to process the RSSI sample values to obtain a report value of RSSI measurement according to the reporting configuration information, and report the report value of RSSI measurement to the network side.

Alternatively, the measurement configuration information includes at least one of measurement frequency, measurement configuration of a reference signal, an RSSI measurement starting event or period and prompt information, where the prompt information is used to prompt whether to remove RSRP of a serving cell from the RSSI sample values.

The first processing module 602 is further configured to, when the RSSI measurement starting event or period is met, perform RSSI measurement to obtain the RSSI sample values; when the RSSI sample values include a valid reference signal, remove a RSRP in the RSSI sample values, and regard the processed RSSI sample values as first RSSI sample values; and when the RSSI sample values do not include any valid reference signal, regard the RSSI sample values as second RSSI sample values.

The first processing module 602 is further configured to subtract the RSRP in the RSSI sample values according to RSSI_DRS=RSSI_drs-RSRP, wherein RSSI_DRS represents the first RSSI sample value, RSSI_drs represents the RSSI sample value, and RSRP represents RSRP of a serving cell; or, subtract the RSRP in the RSSI sample values according to RSSI_DRS=RSSI_drs-N×RSRP, wherein RSSI_DRS represents the first RSSI sample value, RSSI_drs represents the RSSI sample value, N represents a number of RBs in a measurement bandwidth, and RSRP represents the RSRP of the serving cell; or, subtract the RSRP in the RSSI sample values according to RSSI_DRS=RSSI_drs-N×M×RSRP, wherein RSSI_DRS represents the first RSSI sample value, RSSI_drs represents the RSSI sample value, N represents the number of RBs in the measurement bandwidth, M represents a number of REs configured for RSRP measurement in each RB, and RSRP represents the RSRP of the serving cell.

Alternatively, the second processing module 603 is further configured to combine the first RSSI sample values and the second RSSI sample values into an RSSI sample set; process the first RSSI sample values and second RSSI sample values in the RSSI sample value set to obtain the report value of RSSI measurement according to a reporting type of the RSSI sample values, the reporting configuration information includes the reporting type of the RSSI sample values; and report the report value of RSSI measurement to the network side.

Alternatively, the reporting type of the RSSI sample values is at least one of a mean value of the RSSI sample values, a ratio of the RSSI sample values higher than an RSSI reporting threshold value to all the RSSI sample values, or a mean value of the RSSI sample values higher than the RSSI reporting threshold value.

Alternatively, the reporting configuration information includes the RSSI reporting threshold value and an RSSI reporting event or period.

The above is the preferred implementation mode of the disclosure. It should be pointed out that those skilled in the art may further make a plurality of improvements and embellishments without departing from the principle of the disclosure and these improvements and embellishments shall also fall within the scope of protection of the disclosure.

## Claims

1. A method for signal strength detection, performed by a terminal, **characterized by** comprising:
receiving measurement configuration information and reporting configuration information for Received Signal Strength Indication, RSSI, measurement issued from a network side (301);
performing the RSSI measurement to obtain RSSI sample values according to the measurement configuration information (302); and
processing the RSSI sample values to obtain a report value of RSSI measurement according to the reporting configuration information, and reporting the report value of RSSI measurement to the network side (303), wherein the measurement configuration information comprises measurement frequency, measurement configuration of a reference signal, and an RSSI measurement starting event or RSSI measurement period, the measurement configuration of the reference signal comprises a measurement period, a measurement opportunity in the measurement period and a duration of one measurement opportunity,
wherein performing the RSSI measurement to obtain the RSSI sample values according to the measurement configuration information (302) comprises:
when the RSSI measurement starting event or period is met, performing the RSSI measurement to obtain the RSSI sample values (402);
when the RSSI sample values comprise a valid reference signal, removing the RSRP in the RSSI sample values, and regarding the processed RSSI sample values as first RSSI sample values (403); and
when the RSSI sample values do not comprise any valid reference signal, regarding the RSSI sample values as second RSSI sample values (404),
wherein removing the RSRP in the RSSI sample values and regarding the processed RSSI sample values as the first RSSI sample values comprise:
subtracting the RSRP in the RSSI sample values according to RSSI_DRS=RSSI_drs-RSRP, wherein RSSI_DRS represents the first RSSI sample value, RSSI_drs represents the RSSI sample value, and RSRP represents the RSRP of the serving cell; or,
subtracting the RSRP in the RSSI sample values according to RSSI_DRS=RSSI_drs-N × RSRP, wherein RSSI_DRS represents the first RSSI sample value, RSSI_drs represents the RSSI sample value, N represents a number of Resource Blocks, RBs, in a measurement bandwidth, and RSRP represents the RSRP of the serving cell; or,
subtracting the RSRP in the RSSI sample values according to RSSI_DRS=RSSI_drs-N×M×RSRP, wherein RSSI_DRS represents the first RSSI sample value, RSSI_drs represents the RSSI sample value, N represents the number of RBs in the measurement bandwidth, M represents a number of Resource Elements, Res, for RSRP measurement in each RB, and RSRP represents the RSRP of the serving cell.

2. The method according to claim 1, wherein processing the RSSI sample values to obtain the report value of RSSI measurement according to the reporting configuration information and reporting the report value of RSSI measurement to the network side (303) specifically comprises:
combining the first RSSI sample values and the second RSSI sample values into an RSSI sample set (405);
processing the first RSSI sample values and second RSSI sample values in the RSSI sample value set to obtain the report value of RSSI measurement according to a reporting type of the RSSI sample values, wherein the reporting configuration information comprises the reporting type of the RSSI sample values (406); and
reporting the report value of RSSI measurement to the network side (407).

3. The method according to claim 2, wherein the reporting type of the RSSI sample values is at least one of a mean value of the RSSI sample values, a ratio of the RSSI sample values higher than an RSSI reporting threshold value to all the RSSI sample values, or a mean value of the RSSI sample values higher than the RSSI reporting threshold value.

4. The method according to claim 1, wherein the reporting configuration information comprises the RSSI reporting threshold value and an RSSI reporting event or period.

5. A terminal for signal strength detection, **characterized by** comprising:
a second receiving module (601), configured to receive measurement configuration information and reporting configuration information for Received Signal Strength Indication (RSSI) measurement issued from a network side;
a first processing module (602), configured to perform the RSSI measurement to obtain RSSI sample values according to the measurement configuration information; and
a second processing module (603), configured to process the RSSI sample values to obtain a report value of RSSI measurement according to the reporting configuration information, and report the report value of RSSI measurement to the network side, wherein the measurement configuration information comprises measurement frequency, measurement configuration of a reference signal, and an RSSI measurement starting event or RSSI measurement period, the measurement configuration of the reference signal comprises a measurement period, a measurement opportunity in the measurement period and a duration of one measurement opportunity,
wherein the first processing module (602) is further configured to, when the RSSI measurement starting event or period is met, perform the RSSI measurement to obtain the RSSI sample values; when the RSSI sample values comprise a valid reference signal, remove RSRP in the RSSI sample values, and regard the processed RSSI sample values as first RSSI sample values; and when the RSSI sample values do not comprise any valid reference signal, regard the RSSI sample values as second RSSI sample values,
wherein the first processing module (602) is further configured to subtract the RSRP in the RSSI sample values according to RSSI_DRS=RSSI_drs-RSRP, wherein RSSI_DRS represents the first RSSI sample value, RSSI_drs represents the RSSI sample value, and RSRP represents the RSRP of the serving cell; or, subtract the RSRP in the RSSI sample values according to RSSI_DRS=RSSI_drs-N×RSRP, wherein RSSI_DRS represents the first RSSI sample value, RSSI_drs represents the RSSI sample value, N represents a number of Resource Blocks (RBs) in a measurement bandwidth, and RSRP represents the RSRP of the serving cell; or, subtract the RSRP in the RSSI sample values according to RSSI_DRS=RSSI_drs-N× M×RSRP, wherein RSSI_DRS represents the first RSSI sample value, RSSI_drs represents the RSSI sample value, N represents the number of RBs in the measurement bandwidth, M represents a number of Resource Elements (REs) configured for RSRP measurement in each RB, and RSRP represents the RSRP of the serving cell.

6. The terminal according to claim 5, wherein the second processing module (603) is further configured to combine the first RSSI sample values and the second RSSI sample values into an RSSI sample set; process the first RSSI sample values and second RSSI sample values in the RSSI sample value set to obtain the report value of RSSI measurement according to a reporting type of the RSSI sample values, wherein the reporting configuration information comprises the reporting type of the RSSI sample values; and report the report value of RSSI measurement to the network side.

7. The terminal according to claim 6, wherein the reporting type of the RSSI sample values is at least one of a mean value of the RSSI sample values, a ratio of the RSSI sample values higher than an RSSI reporting threshold value to all the RSSI sample values, or a mean value of the RSSI sample values higher than the RSSI reporting threshold value.

8. The terminal according to claim 5, wherein the reporting configuration information comprises the RSSI reporting threshold value and an RSSI reporting event or period.

## Patentansprüche

1. Verfahren für die Signalstärkeerkennung, das von einem Endgerät durchgeführt wird, **gekennzeichnet durch**:
Empfangen von Messungskonfigurationsinformationen und Berichten von Konfigurationsinformationen der Messung der empfangenen Signalstärkeanzeige, RSSI, die von einer Netzwerkseite (301) ausgegeben wird;
Durchführen der RSSI-Messung zum Erhalten von RSSI-Abtastwerten gemäß den Messungskonfigurationsinformationen (302); und
Verarbeiten der RSSI-Abtastwerte, um einen Berichtswert der RSSI-Messung gemäß den Berichtskonfigurationsinformationen zu erhalten, und Berichten des Berichtswerts der RSSI-Messung an die Netzwerkseite (303), wobei die Messungskonfigurationsinformationen die Messungsfrequenz, die Messungskonfiguration eines Referenzsignals und ein RSSI-Messungsstartereignis oder einen RSSI-Messungszeitraum umfassen, wobei die Messungskonfiguration des Referenzsignals einen Messungszeitraum, eine Messungsgelegenheit in dem Messungszeitraum und eine Dauer einer Messungsgelegenheit umfasst,
wobei das Durchführen der RSSI-Messung zum Erhalten der RSSI-Abtastwerte gemäß den Messungskonfigurationsinformationen (302) umfasst:
wenn das RSSI-Messungsstartereignis oder der Zeitraum erfüllt ist, Durchführen der RSSI-Messung zum Erhalten der RSSI-Abtastwerte (402);
wenn die RSSI-Abtastwerte ein gültiges Referenzsignal umfassen, Entfernen des RSRP in den RSSI-Abtastwerten und Betrachten der verarbeiteten RSSI-Abtastwerte als erste RSSI-Abtastwerte (403); und
wenn die RSSI-Abtastwerte kein gültiges Referenzsignal umfassen, Betrachten der RSSI-Abtastwerte als zweite RSSI-Abtastwerte (404),
wobei das Entfernen des RSRP in den RSSI-Abtastwerten und das Betrachten der verarbeiteten RSSI-Abtastwerte als die ersten RSSI-Abtastwerte umfassen:
Subtrahieren des RSRP in den RSSI-Abtastwerten gemäß RSSI_DRS=RSSI_drs-RSRP, wobei RSSI_DRS den ersten RSSI-Abtastwert darstellt, RSSI_drs den RSSI-Abtastwert darstellt, und RSRP den RSRP der bedienenden Zelle darstellt; oder
Subtrahieren des RSRP in den RSSI-Abtastwerten gemäß RSSI_DRS=RSSI_drs-N × RSRP, wobei RSSI_DRS den ersten RSSI-Abtastwert darstellt, RSSI_drs den RSSI-Abtastwert darstellt, N eine Anzahl von Ressourcenblöcken, RBs, in einer Messungsbandbreite darstellt und RSRP den RSRP der bedienenden Zelle darstellt; oder,
Subtrahieren des RSRP in den RSSI-Abtastwerten gemäß RSSI_DRS=RSSI_drs-N × M × RSRP, wobei RSSI_DRS den ersten RSSI-Abtastwert darstellt, RSSI_drs den RSSI-Abtastwert darstellt, N eine Anzahl von RBs in der Messungsbandbreite darstellt, M eine Anzahl von Ressourcenelementen, REs, für eine RSRP-Messung in jedem RB darstellt, und RSRP den RSRP der bedienenden Zelle darstellt.

2. Verfahren nach Anspruch 1, wobei die Verarbeitung der RSSI-Abtastwerte zum Erhalten des Berichtswert der RSSI-Messung gemäß den Berichtskonfigurationsinformationen und das Berichten des Berichtswert der RSSI-Messung an die Netzwerkseite (303) insbesondere umfasst:
Kombinieren der ersten RSSI-Abtastwerte und der zweiten RSSI-Abtastwerte zu einem RSSI-Abtastsatz (405);
Verarbeiten der ersten RSSI-Abtastwerte und der zweiten RSSI-Abtastwerte in dem RSSI-Abtastwertsatz zum Erhalten des Berichtswerts der RSSI-Messung gemäß einem Berichtstyp der RSSI-Abtastwerte, wobei die Berichtskonfigurationsinformationen den Berichtstyp der RSSI-Abtastwerte umfassen (406); und
Berichten des Berichtswertes der RSSI-Messung an die Netzwerkseite (407).

3. Verfahren nach Anspruch 2, wobei der Berichtstyp der RSSI-Abtastwerte wenigstens einer von einem Mittelwert der RSSI-Abtastwerte, einem Verhältnis der RSSI-Abtastwerte, die höher sind als ein RSSI-Berichtsschwellenwert, zu allen RSSI-Abtastwerten oder ein Mittelwert der RSSI-Abtastwerte, die höher sind als der RSSI-Meldeschwellenwert.

4. Verfahren nach Anspruch 1, wobei die Berichtskonfigurationsinformationen den RSSI-Berichtsschwellenwert und ein RSSI-Berichtsereignis oder einen RSSI-Berichtszeitraum umfassen.

5. Endgerät für die Signalstärkeerkennung, **dadurch gekennzeichnet, dass** es umfasst:
ein zweites Empfangsmodul (601), das dazu konfiguriert ist, Messungskonfigurationsinformationen zu empfangen und Berichtskonfigurationsinformationen der Messung der empfangenen Signalstärkeanzeige (RSSI) zu berichten, die von einer Netzwerkseite ausgegeben werden;
ein erstes Verarbeitungsmodul (602), das dazu konfiguriert ist, die RSSI-Messung durchzuführen, um RSSI-Abtastwerte gemäß den Messungskonfigurationsinformationen zu erhalten; und
ein zweites Verarbeitungsmodul (603), das dazu konfiguriert ist, die RSSI-Abtastwerte zu verarbeiten, um einen Berichtswert der RSSI-Messung gemäß den Berichtskonfigurationsinformationen zu erhalten, und den Berichtswert der RSSI-Messung an die Netzwerkseite zu berichten, wobei die Messungskonfigurationsinformationen die Messungsfrequenz, die Messungskonfiguration eines Referenzsignals und ein RSSI-Messungsstartereignis oder einen RSSI-Messungszeitraum umfassen, wobei die Messungskonfiguration des Referenzsignals einen Messungszeitraum, eine Messungsgelegenheit in dem Messungszeitraum und eine Dauer einer Messungsgelegenheit umfasst,
wobei das erste Verarbeitungsmodul (602) ferner dazu konfiguriert ist, wenn das RSSI-Messungsstartereignis oder der Zeitraum erfüllt ist, die RSSI-Messung zum Erhalten der RSSI-Abtastwerte durchzuführen; wenn die RSSI-Abtastwerte ein gültiges Referenzsignal umfassen, den RSRP in den RSSI-Abtastwerten zu entfernen und die verarbeiteten RSSI-Abtastwerte als erste RSSI-Abtastwerte zu betrachten; und wenn die RSSI-Abtastwerte kein gültiges Referenzsignal umfassen, die RSSI-Abtastwerte als zweite RSSI-Abtastwerte zu betrachten, wobei das erste Verarbeitungsmodul (602) ferner dazu konfiguriert ist, die RSRP in den RSSI-Abtastwerten gemäß RSSI_DRS=RSSI_drs-RSRP zu subtrahieren, wobei RSSI_DRS den ersten RSSI-Abtastwert darstellt, RSSI_drs den RSSI-Abtastwert darstellt, und RSRP den RSRP der bedienenden Zelle darstellt; oder die RSRP in den RSSI-Abtastwerten gemäß RSSI_DRS=RSSI_drs-N× RSRP zu subtrahieren, wobei RSSI_DRS den ersten RSSI-Abtastwert darstellt, RSSI_drs den RSSI-Abtastwert darstellt, N eine Anzahl von Ressourcenblöcken (RBs) in einer Messungsbandbreite darstellt und RSRP den RSRP der bedienenden Zelle darstellt; oder die RSRP in den RSSI-Abtastwerten gemäß RSSI_DRS=RSSI_drs-N × M × RSRP zu subtrahieren, wobei RSSI_DRS den ersten RSSI-Abtastwert darstellt, RSSI_drs den RSSI-Abtastwert darstellt, N eine Anzahl von RBs in der Messungsbandbreite darstellt, M eine Anzahl von Ressourcenelementen (REs) für eine RSRP-Messung in jedem RB darstellt, und RSRP den RSRP der bedienenden Zelle darstellt.

6. Endgerät nach Anspruch 5, wobei das zweite Verarbeitungsmodul (63) ferner dazu konfiguriert ist, die ersten RSSI-Abtastwerte und die zweiten RSSI-Abtastwerte zu einem RSSI-Abtastsatz zu kombinieren; die ersten RSSI-Abtastwerte und die zweiten RSSI-Abtastwerte in dem RSSI-Abtastwertsatz zum Erhalten des Berichtswerts der RSSI-Messung gemäß einem Berichtstyp der RSSI-Abtastwerte zu verarbeiten, wobei die Berichtskonfigurationsinformationen den Berichtstyp der RSSI-Abtastwerte umfassen; und den Berichtswert der RSSI-Messung an die Netzwerkseite zu berichten.

7. Endgerät nach Anspruch 6, wobei der Berichtstyp der RSSI-Abtastwerte wenigstens einer von einem Mittelwert der RSSI-Abtastwerte, einem Verhältnis der RSSI-Abtastwerte, die höher sind als ein RSSI-Berichtsschwellenwert, zu allen RSSI-Abtastwerten oder ein Mittelwert der RSSI-Abtastwerte, die höher sind als der RSSI-Meldeschwellenwert.

8. Endgerät nach Anspruch 5, wobei die Berichtskonfigurationsinformationen den RSSI-Berichtsschwellenwert und ein RSSI-Berichtsereignis oder einen RSSI-Berichtszeitraum umfassen.

## Revendications

1. Procédé de détection de l'intensité d'un signal, effectué par un terminal, **caractérisé en ce qu'**il comprend :
la réception d'informations de configuration de mesure et le rapport des informations de configuration pour une mesure d'indication de force de signal reçu, RSSI, émise depuis un côté réseau (301) ;
l'exécution de la mesure RSSI pour obtenir des valeurs d'échantillon RSSI selon les informations de configuration de mesure (302) ; et
le traitement des valeurs d'échantillon RSSI pour obtenir une valeur de rapport de mesure RSSI selon les informations de configuration de rapport, et le rapport de la valeur de rapport de mesure RSSI au côté réseau (303), les informations de configuration de mesure comprenant une fréquence de mesure, une configuration de mesure d'un signal de référence, et un événement de début de mesure RSSI ou une période de mesure RSSI, la configuration de mesure du signal de référence comprend une période de mesure, une opportunité de mesure dans la période de mesure et une durée d'une opportunité de mesure,
dans lequel l'exécution de la mesure RSSI pour obtenir les valeurs d'échantillon RSSI selon les informations de configuration de mesure (302) comprend :
lorsque l'événement ou la période de début de mesure RSSI est atteint, effectuer la mesure RSSI pour obtenir les valeurs d'échantillon RSSI (402) ;
lorsque les valeurs d'échantillon RSSI comprennent un signal de référence valide, la suppression du RSRP dans les valeurs d'échantillon RSSI, et la considération des valeurs d'échantillon RSSI traitées comme des premières valeurs d'échantillon RSSI (403) ; et
lorsque les valeurs d'échantillon RSSI ne comprennent aucun signal de référence valide, la considération des valeurs d'échantillon RSSI comme des secondes valeurs d'échantillon RSSI (404),
dans lequel l'élimination du RSRP dans les valeurs d'échantillon RSSI et le traitement des valeurs d'échantillon RSSI en tant que premières valeurs d'échantillon RSSI comprennent :
la soustraction du RSRP dans les valeurs d'échantillon RSSI selon RSSI_DRS = RSSI_drs - RSRP, RSSI_DRS représentant la première valeur d'échantillon RSSI, RSSI_drs représentant la valeur d'échantillon RSSI et RSRP représentant le RSRP de la cellule de desserte ; ou,
la soustraction du RSRP dans les valeurs d'échantillon RSSI selon RSSI_DRS = RSSI_drs - N × RSRP, dans lequel RSSI DRS représente la première valeur d'échantillon RSSI, RSSI drs représente la valeur d'échantillon RSSI, N représente un certain nombre de blocs de ressources, RB, dans une bande passante de mesure, et RSRP représente le RSRP de la cellule de desserte ; ou,
la soustraction du RSRP dans les valeurs d'échantillon RSSI selon RSSI_DRS = RSSI_drs - N × M × RSRP, dans lequel RSSI DRS représente la première valeur d'échantillon RSSI, RSSI_drs représente la valeur d'échantillon RSSI, N représente le nombre de RB dans la bande passante de mesure, M représente un certain nombre d'éléments de ressources, Res, pour la mesure RSRP dans chaque RB, et RSRP représente le RSRP de la cellule de desserte.

2. Procédé selon la revendication 1, dans lequel le traitement des valeurs d'échantillon RSSI pour obtenir la valeur de rapport de mesure RSSI selon les informations de configuration de rapport et le rapport de la valeur de rapport de mesure RSSI au côté réseau (303) comprend spécifiquement :
la combinaison des premières valeurs d'échantillon RSSI et des secondes valeurs d'échantillon RSSI dans un ensemble d'échantillons RSSI (405) ;
le traitement des premières valeurs d'échantillon RSSI et des secondes valeurs d'échantillon RSSI dans l'ensemble de valeurs d'échantillon RSSI pour obtenir la valeur de rapport de mesure RSSI selon un type de rapport des valeurs d'échantillon RSSI, les informations de configuration de rapport comprenant le type de rapport des valeurs d'échantillon RSSI (406); et
le rapport de la valeur de rapport de la mesure RSSI au côté réseau (407).

3. Procédé selon la revendication 2, dans lequel le type de rapport des valeurs d'échantillon RSSI est au moins l'un parmi une valeur moyenne des valeurs d'échantillon RSSI, un rapport des valeurs d'échantillon RSSI supérieur à une valeur seuil de rapport RSSI à toutes les valeurs d'échantillon RSSI, ou une valeur moyenne des valeurs d'échantillon RSSI supérieure à la valeur du seuil de rapport RSSI.

4. Procédé selon la revendication 1, dans lequel les informations de configuration de rapport comprennent la valeur seuil de rapport RSSI et un événement ou une période de rapport RSSI.

5. Terminal pour la détection de l'intensité d'un signal, **caractérisé en ce qu'**il comprend :
un deuxième module de réception (601), configuré pour recevoir des informations de configuration de mesure et rapporter des informations de configuration pour une mesure d'indication d'intensité de signal reçu (RSSI) émise depuis un côté réseau ;
un premier module de traitement (602), configuré pour effectuer la mesure RSSI afin d'obtenir des valeurs d'échantillon RSSI en fonction des informations de configuration de mesure ; et
un deuxième module de traitement (603), configuré pour traiter les valeurs d'échantillon RSSI afin d'obtenir une valeur de rapport de mesure RSSI en fonction des informations de configuration de rapport, et rapporter la valeur de rapport de mesure RSSI au côté réseau,
dans lequel les informations de configuration de mesure comprennent une fréquence de mesure, une configuration de mesure d'un signal de référence et un événement de début de mesure RSSI ou une période de mesure RSSI, la configuration de mesure du signal de référence comprend une période de mesure, une opportunité de mesure dans la période de mesure et une durée d'une opportunité de mesure,
dans lequel le premier module de traitement (602) est en outre configuré pour, lorsque l'événement ou la période de début de mesure RSSI est atteint, effectuer la mesure RSSI pour obtenir les valeurs d'échantillon RSSI ; lorsque les valeurs d'échantillon RSSI comprennent un signal de référence valide, supprimer RSRP dans les valeurs d'échantillon RSSI, et considérer les valeurs d'échantillon RSSI traitées comme des premières valeurs d'échantillon RSSI ; et lorsque les valeurs d'échantillon RSSI ne comprennent aucun signal de référence valide, considérer les valeurs d'échantillon RSSI comme des secondes valeurs d'échantillon RSSI,
dans lequel le premier module de traitement (602) est en outre configuré pour soustraire le RSRP dans les valeurs d'échantillon RSSI selon RSSI_DRS = RSSI drs -RSRP, dans lequel RSSI DRS représente la première valeur d'échantillon RSSI, RSSI drs représente la valeur d'échantillon RSSI, et RSRP représente le RSRP de la cellule de desserte ; ou soustraire le RSRP dans les valeurs d'échantillon RSSI selon RSSI DRS=RSSI drs -N × RSRP,
dans lequel RSSI DRS représente la première valeur d'échantillon RSSI, RSSI drs représente la valeur d'échantillon RSSI, N représente un nombre de blocs de ressources (RB) dans une bande passante de mesure, et RSRP représente le RSRP de la cellule de desserte ; ou soustraire le RSRP dans les valeurs d'échantillon RSSI selon RSSI_DRS = RSSI drs -N × M × RSRP, dans lequel RSSI DRS représente la première valeur d'échantillon RSSI, RSSI drs représente la valeur d'échantillon RSSI, N représente le nombre de RB dans le bande passante de mesure, M représente un certain nombre d'éléments de ressources (RE) configurés pour la mesure RSRP dans chaque RB, et RSRP représente le RSRP de la cellule de desserte.

6. Terminal selon la revendication 5, dans lequel le deuxième module de traitement (603) est en outre configuré pour combiner les premières valeurs d'échantillon RSSI et les secondes valeurs d'échantillon RSSI dans un ensemble d'échantillons RSSI; traiter les premières valeurs d'échantillon RSSI et les secondes valeurs d'échantillon RSSI dans l'ensemble de valeurs d'échantillon RSSI pour obtenir la valeur de rapport de mesure RSSI selon un type de rapport des valeurs d'échantillon RSSI, les informations de configuration de rapport comprenant le type de rapport des valeurs d'échantillon RSSI ; et signaler la valeur du rapport de la mesure RSSI au côté réseau.

7. Terminal selon la revendication 6, dans lequel le type de rapport des valeurs d'échantillon RSSI est au moins l'un parmi une valeur moyenne des valeurs d'échantillon RSSI, un rapport des valeurs d'échantillon RSSI supérieur à une valeur seuil de rapport RSSI à toutes les valeurs d'échantillon RSSI, ou une valeur moyenne des valeurs d'échantillon RSSI supérieure à la valeur du seuil de rapport RSSI.

8. Terminal selon la revendication 5, dans lequel les informations de configuration de rapport comprennent la valeur seuil de rapport RSSI et un événement ou une période de rapport RSSI.
